# EUROPÄISCHE PATENTSCHRIFT

(11) **EP 0 825 628 B1**
(45) Veröffentlichungstag und Bekanntmachung des Hinweises auf die Patenterteilung: **09.01.2002**
(21) Anmeldenummer: 97112165.2
(22) Anmeldetag: 16.07.1997
(51) Int. Cl.: H01H 9/22, F16P 3/08

(54) **Überwachungseinrichtung**
Monitoring system
Système de surveillance

(30) Priorität: 16.08.1996 DE 19632962
(43) Veröffentlichungstag der Anmeldung: 25.02.1998
(73) Patentinhaber: K.A. SCHMERSAL GmbH & Co., D-42279 Wuppertal (DE)
(72) Erfinder: Letzel, Helmut, 51069 Köln (DE)
(74) Vertreter: Sparing - Röhl - Henseler Patentanwälte

(56) Entgegenhaltungen:
- EP-A- 0 367 026
- EP-A- 0 438 008
- EP-A- 0 577 360
- EP-A- 0 677 830
- WO-A-85/03970
- DE-A- 3 606 458
- FR-A- 639 187

## Beschreibung

Die Erfindung betrifft eine Überwachungseinrichtung nach dem Oberbegriff des Anspruchs 1.

Für zu überwachende Räume etwa von maschinellen Anlagen od. dgl. ist es bekannt, die Zugangstüren oder -öffnungen mit einer Sicherheitsschaltereinrichtung zu versehen, die einen regelmäßig innenseitig angeordneten Sicherheitsschalter umfaßt, der über einen an der Tür befindlichen und mit dieser beweglichen Betätiger betätigt wird, wenn die Tür geschlossen oder geöffnet wird, wobei der Betätiger zugleich die Türverriegelung bildet, indem er sich am benachbarten feststehenden Teil mit zunehmender Klemmkraft abstützt. Hierbei werden Betätiger verwendet, die durch Verdrehen von Betätigungsgriffen verschwenkt werden. Einerseits ist dies nicht für Schiebetüren geeignet, andererseits ist die Kraftübertragung nicht gleichmäßig.

Aus der WO 85 03970 A ist eine Sicherheits-Verriegelungsvorrichtung für Gefahrenbereiche gemäß dem Oberbegriff des Anspruchs 1 bekannt, die für verschiedene Arten von Türen geeignet ist und einen Sicherheitsschalter umfaßt, der durch einen Betätiger betätigbar ist. Dieser ist mit einem an der Außenseite der Tür angebrachten Betätigergriff gekoppelt. Die Sicherheits-Verriegelungsvorrichtung ist so ausgestaltet, daß eine Verriegelung einer sich schließenden Tür grundsätzlich erfolgt, wobei der Sicherheitsschalter immer aktiviert wird.

Aufgabe der Erfindung ist es, eine Überwachungseinrichtung nach dem Oberbegriff des Anspruchs 1 zu schaffen, die sich auch für Schiebetüren eignet und eine gleichmäßige Kraftübertragung ermöglicht.

Diese Aufgabe wird entsprechend dem kennzeichnenden Teil des Anspruchs 1 gelöst.

Dadurch, daß ein in seiner Längsrichtung in einer Führung einer Abdeckung durch Betätigung eines Betätigungsgriffs verschiebbarer Betätiger verwendet wird, der einen Zahnstangenabschnitt aufweist, der mit einem mit dem Zapfen gekoppelten Zahnkranzsegment in Eingriff steht, wird der Betätiger zum Türverriegeln und zur Schalterbetätigung aus seiner zurückgezogenen Stellung mit gleichmäßiger Kraftübertragung ausgeschoben, so daß die Einrichtung sowohl für Dreh- als auch für Schiebetüren und für unterschiedliche Türstärken geeignet ist.

Weitere Ausgestaltungen der Erfindung sind der nachfolgenden Beschreibung und den Unteransprüchen zu entnehmen.

Die Erfindung wird nachstehend anhand von in den beigefügten Abbildungen schematisch dargestellten Ausführungsbeispielen näher erläutert.

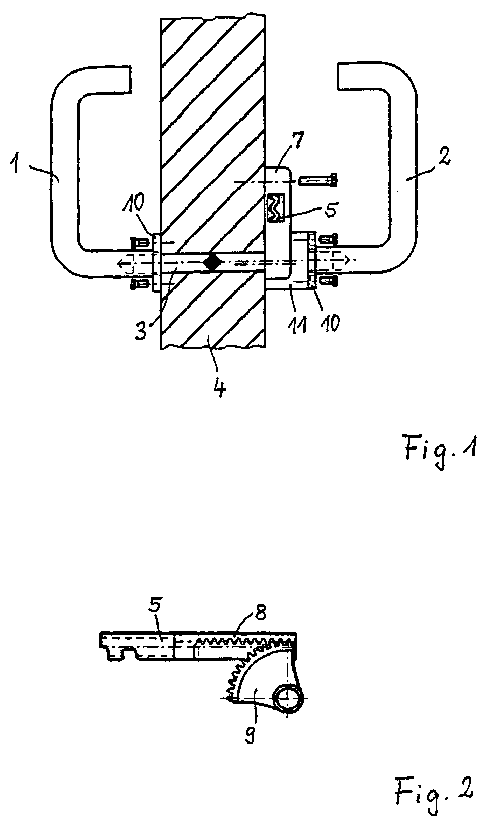

Fig. 1 zeigt in Frontansicht eine kombinierte Schalter- und Türbetätigungseinrichtung für eine Überwachungseinrichtung.

Fig. 2 zeigt Elemente der Einrichtung von Fig. 1.

Fig. 3, 4 und 5 zeigen eine weitere Schalter- und Türbetätigungsinrichtung in verschiedenen Stellungen in Draufsicht an der Innenseite einer zugehörigen Tür.

Fig. 6 bis 8 zeigen Freilaufstellungen bezüglich der jeweiligen Ansichten von Fig. 3 bis 5.

Fig. 9 zeigt schematisch in Draufsicht eine Überwachungseinrichtung.

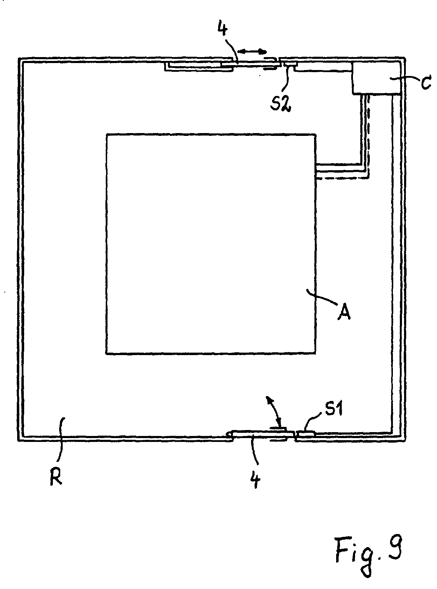

Fig. 9 zeigt eine Überwachungseinrichtung für einen begehbaren, verschließbaren Raumbereich R einer maschinellen Anlage A. Hierbei kann es sich beispielsweise um eine Roboterfertigungsanlage handeln, die in einem umzäunten Raumbereich R angeordnet ist. Der Raumbereich R ist über mehrere Türen 4 zugänglich. Die Türen 4 können durch Schwenken bzw. Schieben geöffnet bzw. geschlossen werden. Benachbart zu den Türen 4 befindet sich jeweils ein Sicherheitsschalter S1, S2. Außerdem ist eine Steuerung C vorgesehen, die mit der maschinelle Anlage A und den Sicherheitsschaltern S1, S2 gekoppelt ist, um letztere entsprechend dem Betriebszustand der maschinellen Anlage A freizugeben bzw. zu sperren. D.h., wenn der Steuerung C ein Stillstehen der beweglichen Teile der maschinellen Anlage A signalisiert wird, gibt sie die Sicherheitsschalter S1, S2 frei, so daß der Raumbereich R durch öffnen der Türen 4 begehbar wird. Stehen zumindest Teile der maschinellen Anlage A, die eine Gefährdung des Personals bewirken könnten, nicht still, werden die Sicherheitsschalter S1, S2 blockiert, so daß die Türen 4 nicht von außen geöffnet werden können. Außerdem verhindert die Steuerung C ein Inbetriebnehmen der maschinellen Anlage A bei wenigstens einer geöffneten Tür 4.

Die überwachungseinrichtung umfaßt für jede Tür 4 eine Schalter- und Türbetätigungseinrichtung mit zwei Betätigungsgriffen 1, 2, die über einen Zapfen 3 miteinander gekoppelt sind. Der Zapfen 3 verläuft durch eine Bohrung in der Tür 4, so daß sich im dargestellten Ausführungsbeispiel der Betätigungsgriff 1 auf der Außenseite und der Betätigungsgriff 2 auf der Innenseite der Tür 4 befindet.

Auf der Innenseite der Tür 4 ist ein langgestreckter schlüsselartiger Betätiger 5 vorgesehen, der von einer Führung 6 einer Abdekkung 7, die auf der Tür 4 befestigt ist, längsverschieblich aufgenommen wird. Der Betätiger 5 besitzt auf seinem beim Ausschieben unter der Abdeckung 7 verbleibenden Abschnitt einen Zahnstangenabschnitt 8, der mit einem sich über einen Winkelbereich von etwa 90° erstreckenden Zahnkranzsegment 9 in Eingriff steht. Das Zahnkranzsegment 9 ist mit dem Zapfen 3 gekoppelt, so daß dessen entsprechende Drehung eine entsprechende Längsverschiebung des Betätigers 5 aus der Abdeckung 7 heraus zur Verriegelung der Tür 4 und Betätigung eines zugehörigen Schalters (nicht dargestellt) bzw. zurück unter die Abdeckung 7, d.h. außer Verriegelungs- und Schalteingriff, bewirkt.

Anschläge (nicht dargestellt) sind zweckmäßigerweise vorgesehen, damit die Betätigungsgriffe 1, 2 nur um etwa 90° hin- und herschwenkbar sind. Rosetten 10 können um die Eintrittsöffnungen der Betätigungsgriffe 1, 2 herum angeordnet sein.

Damit die Tür 4 von innen nur geöffnet, aber nicht verriegelt werden kann, ist zweckmäßigerweise ein Freilauf vorgesehen, der eine in einem zylindrischen Fortsatz 11 der Abdeckung 7 aufgenommene Scheibe 12 umfaßt, die eine zentrale Ausnehmung 13 aufweist und mit dem Zahnkranzsegment 9 bzw. dem außenseitigen Betätigungsgriff 1 verbunden ist. Der innenseitige Betätigungsgriff 2 besitzt einen Zapfenabschnitt 14 mit einem Querschnitt in Form eines langgestreckten Sechsecks und die Ausnehmung 13 einen Durchmesser entsprechend der größten Längserstreckung des Querschnitts des Zapfenabschnitts 14. Ferner ist die Ausnehmung 13 an zwei gegenüberliegenden Seiten durch gerade Abschnitte 15 derart verengt, daß diese Mitnahmeflächen für den Zapfenabschnitt 14 bilden.

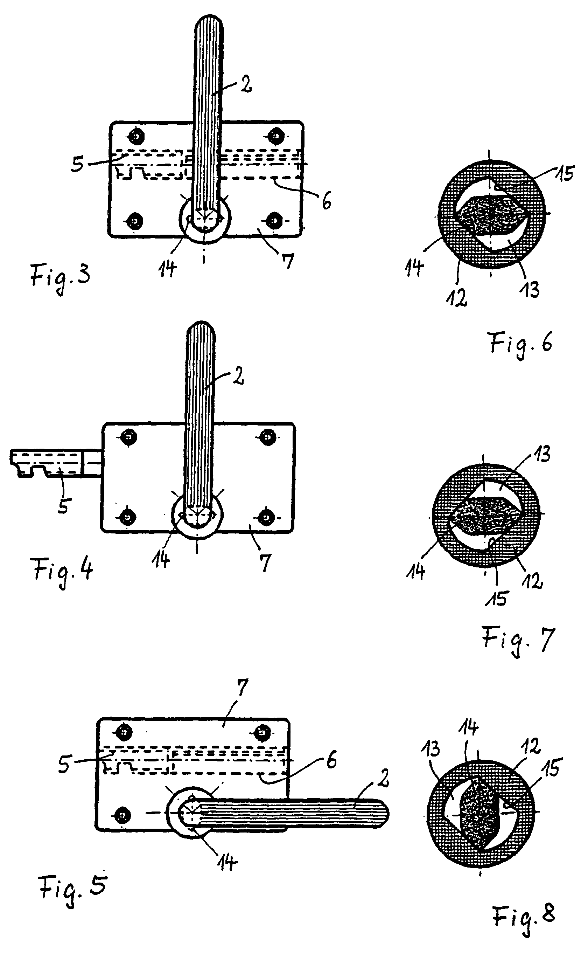

In Fig. 3 befindet sich der Betätigungsgriff 2 in vertikaler Stellung und der Betätiger 5 in zurückgezogener Position, während die Scheibe 12 so positioniert ist, daß der Betätigungsgriff 2, der zum Verriegeln nach rechts um 90° umzulegen wäre, dabei die Scheibe 12 über den Zapfenabschnitt 3 nicht betätigen kann, sondern letzterer frei in der Ausnehmung 13 läuft, vgl. auch Fig. 6.

Ist dagegen der Betätiger 5 durch entsprechendes Umlegen des außenseitigen Betätigungsgriffs 1 in eine um 90° gedrehte Position in Verriegelungsposition, Fig. 4, so ist die Scheibe 12 durch den außenseitigen Betätigungsgriff 1 ebenfalls um 90° gedreht worden, Fig. 7, so daß der Zapfenabschnitt 14 in der zum öffnen notwendigen Drehrichtung an den Mitnahmeflächen bildenden Abschnitten 15 anliegt. Durch entsprechendes Drehen des innseitigen Betätigungsgriffs 2 wird daher die Scheibe 12 mitgenommen und dadurch über das Zahnkranzsegment 9 der Betätiger 5 in die geöffnete Stellung bewegt werden kann, Fig. 5 und 8.

In der nunmehrigen Relativposition von Scheibe 12 und Zapfenabschnitt 14 läßt sich der innenseitige Betätigungsgriff 2 erneut ohne Betätigung des Betätigers 5 in die in Fig. 4 dargestellte Position verschwenken.

## Patentansprüche

1. Überwachungseinrichtung für einen mit wenigstens einer Tür (4) verschließbaren Raumbereich (R) einer maschinellen Anlage (A), umfassend einen Sicherheitsschalter (S1, S2) benachbart zur jeweiligen Tür (4), der mittels eines langgestreckten, schlüsselartigen Betätigers (5) betätigbar ist, wobei der Betätiger (5) über einen an einen Zapfen (3) gekoppelten Betätigungsgriff (1) an der Außenseite der Tür (4) in bzw. außer Eingriff mit dem Sicherheitsschalter (S1, S2) bringbar und eine mit der maschinellen Anlage (A) und dem wenigstens einen Sicherheitsschalter (S1, S2) gekoppelte Steuerung (C) zur Freigabe bzw. Sperrung des wenigstens einen Sicherheitsschalters (S1, S2) entsprechend dem Betriebszustand der maschinellen Anlage (A) vorgesehen ist, wobei der in seiner Längsrichtung in einer Führung (6) einer Abdeckung (7) durch Betätigung des Betätigungsgriffs (1) verschiebbare Betätiger (5) einen Zahnstangenabschnitt (8) aufweist, der mit einem mit dem Zapfen (3) gekoppelten Zahnkranzsegment (9) in Eingriff steht, **dadurch gekennzeichnet, daß** ein weiterer, an den Zapfen (3) gekoppelter Betätigungsgriff (2) an der Innenseite der Tür (4) vorgesehen ist, der einen Freilauf bezüglich der Schließbewegung aufweist und über den der Betätiger (5) außer Eingriff mit dem Sicherheitsschalter (S1, S2) bringbar ist.

2. Überwachungseinrichtung nach Anspruch 1, **dadurch gekennzeichnet, daß** der Zahnstangenabschnitt (8) und das Zahnkranzsegment (9) an der Innenseite der Tür (4) angeordnet sind.

3. Überwachungseinrichtung nach Anspruch 1 oder 2, **dadurch gekennzeichnet, daß** der Freilauf eine mit dem Betätigungsgriff (1) an der Außenseite der Tür (4) gekoppelte Scheibe (12) umfaßt, die mit einer Durchtrittsöffnung (13) für einen im Schnitt länglichen Zapfenabschnitt (14) des innenseitigen Betätigungsgriffs (2) versehen ist, wobei die Durchtrittsöffnung (13) mit einem Durchmesser entsprechend der größten Breite des Zapfenabschnitts (14) an gegenüberliegenden Seiten unter Bildung von Mitnahmeflächen (15) für den Zapfenabschnitt (14) verengt ist

4. Überwachungseinrichtung nach einem der Ansprüche 1 bis 3, **dadurch gekennzeichnet, daß** sich das Zahnkranzsegment (9) über einen Winkelbereich von etwa 90° erstreckt

## Claims

1. Monitoring system for an area (R) of a machine plant (A) closable at least by one door (4), comprising a safety switch (S1, S2) adjacent to the respective door (4), operated by a long, key-like actuator (5), the actuator (5) being engageable with or disengageable from the safety switch (S1, S2) over an operating handle (1) outside the door (4) coupled to a pin (3), having a control unit (C) coupled to a machine plant (A) and at least one safety switch (S1, S2) for releasing or locking at least one safety switch (S1, S2) according to the operating state of the machine plant (A), the actuator (5), slidable in its longitudinal direction in a guide (6) of a cover (7) by operating the operating handle (1), having a rack (8) meshing with a ring gear segment (9) coupled with the pin (3), **characterised in that** a further actuating handle (2) coupled to the pin (3) is provided on the inside of the door (4), has free motion in relation to the closing movement and the actuator (5) can be disengaged from the safety switch (S1, S2) via the further actuating handle.

2. Monitoring device according to Claim 1, **characterised in that** the rack (8) and the ring gear segment (9) are arranged on the inside of the door (4).

3. Monitoring device according to Claim 1 or 2, **characterised in that** the free motion system has a disc (12), coupled with the actuating handle (1) on the outside of the door (4), provided with a through hole (13) for a pin section (14), elongated in its section, of the inside actuating handle (2), the through hole (13) with a diameter corresponding to the maximum width of the pin section (14) being narrowed on the opposite sides forming drive faces (15) for the pin section (14).

4. Monitoring device according to one of the Claims 1 to 3, **characterised in that** the ring gear segment (9) extends over an angle of approximately 90 degrees.

## Revendications

1. Dispositif de surveillance pour une zone de local (R) contenant une installation mécanique (A) qui peut être fermée à l'aide d'au moins une porte (4), comprenant un commutateur de sécurité (S1, S2) adjacent à la porte considérée (4), qui peut être actionné au moyen d'un actionneur (5) de forme allongée du type clé, dans lequel l'actionneur (5) peut être relié au commutateur de sécurité (S1, S2) ou isolé de ce dernier au moyen d'une poignée d'actionnement (1) prévue sur le côté extérieur de la porte (4), qui est accouplée à une tige (3), et une commande (C) connectée à l'installation mécanique (A) et audit commutateur de sécurité (S1, S2), qui est destinée à libérer ou à bloquer le commutateur de sécurité (S1, S2) en fonction de l'état de fonctionnement de l'installation mécanique (A), l'actionneur (5), qui peut coulisser dans sa direction longitudinale dans un guide (6) d'un capot (7) sous l'effet de l'actionnement de la poignée d'actionnement (1), présentant un segment de crémaillère (8) qui est en prise avec un secteur de couronne dentée (9) accouplé à la tige (3), **caractérisé en ce qu'**il est prévu sur le côté intérieur de la porte (4) une autre poignée d'actionnement (2) accouplée à la tige (3) et qui présente un mécanisme de roue libre par rapport au mouvement de fermeture et au moyen de laquelle l'actionneur (5) peut être isolé du commutateur de sécurité (S1, S2).

2. Dispositif de surveillance selon la revendication 1, **caractérisé en ce que** le segment de crémaillère (8) et le secteur de couronne dentée (9) sont disposés sur le côté intérieur de la porte (4).

3. Dispositif de surveillance selon la revendication 1 ou 2, **caractérisé en ce que** le mécanisme de roue libre comprend un disque (12) accouplé à la poignée d'actionnement (1) prévue sur le côté extérieur de la porte (4), et muni d'une ouverture de traversée (13) pour un segment de tige (14) d'une forme de section allongée de la poignée d'actionnement du côté intérieur (2), l'ouverture de traversée (13), qui possède un diamètre correspondant à la largeur maximale du segment de tige (14) étant rétrécie sur des côtés opposés en formant ainsi des surfaces d'entraînement (15) pour le segment de tige (14).

4. Dispositif de surveillance selon l'une des revendications 1 à 3, **caractérisé en ce que** le secteur de couronne dentée (9) s'étend sur un secteur angulaire d'environ 90° .
